# EUROPEAN PATENT SPECIFICATION

(11) **EP 1 427 122 B1**
(45) Date of publication and mention of the grant of the patent: **02.01.2008**
(21) Application number: 03017119.3
(22) Date of filing: 28.07.2003
(51) Int. Cl.: H04J 14/02

(54) **Bidirectional wavelength division multiplexing self-healing ring network**
Bidirektionales selbstheilendes Wellenlängenmultiplex-Ringnetzwerk
Réseau en anneau bidirectionnel auto-régénérateur à multiplexage de longueurs d'ondes

(30) Priority: 06.12.2002 KR 2002077169
(43) Date of publication of application: 09.06.2004
(73) Proprietor: SAMSUNG ELECTRONICS CO., LTD., Suwon-City, Kyungki-do (KR)
(72) Inventor: Joo, Young-Hun, Samsung Electronics Co., Ltd., Suwon-city, Kyungki-do (KR); Oh, Yun-Je, Samsung Electronics Co., Ltd., Suwon-city, Kyungki-do (KR); Hwang, Seong-Taek, Samsung Electronics Co., Ltd., Suwon-city, Kyungki-do (KR); Kim, Lae-Kyoung, Samsung Electronics Co., Ltd., Suwon-city, Kyungki-do (KR)
(74) Representative: Grünecker, Kinkeldey, Stockmair & Schwanhäusser Anwaltssozietät

(56) References cited:
- EP-A- 1 221 779
- EP-A- 1 248 392
- US-A1- 2001 038 477
- US-B1- 6 307 986
- US-B1- 6 313 933
- US-B1- 6 414 765
- YOUNGHUN LOO ET AL: "640 Gb/s bidirectional optical transmission by sharing optical amplifiers and DCF" CONFERENCE ON LASERS AND ELECTRO-OPTICS. (CLEO 2002). TECHNICAL DIGEST. POSTCONFERENCE EDITION. LONG BEACH, CA, MAY 19 - 24, 2002, TRENDS IN OPTICS AND PHOTONICS. (TOPS), WASHINGTON, WA : OSA, US, vol. VOL. 73, 19 May 2002 (2002-05-19), pages 495-496, XP010606990 ISBN: 1-55752-706-7

## Description

The present invention relates to a bi-directional wavelength division multiplexing self-healing optical network, in particular, a system capable of constructing a bi-directional self-healing optical network with one strand of optical fiber using a wavelength switching bi-directional add/drop multiplexing unit.

Wavelength division multiplexing (WDM) optical transmission systems are adapted to perform transmission using various wavelengths in a single optical fiber. Such optical transmission systems are thus capable of improving transmission efficiency. In addition, such optical transmission systems are capable of transmitting optical signals regardless of the transmission speed. For these reasons, such optical transmission systems are used in very high-speed Internet networks, which must meet with the challenge of ever increasing transmission volume.

With the exponential growth in transmission speed of communication networks, the reliability of the communication networks is another important factor to consider. Accordingly, if such high-speed communication systems incur a failure, it has to exert a self-healing function to insure continuous service.

For example, an optical ring network is designed to set two different paths between two nodes. This allows for flexibility address a failure in one path. On the other hand, a self-healing optical ring network is designed to provide additional bandwidth or communication equipment to automatically restore a failure generated in the network.

Such optical ring networks are also divided by a traffic direction and a failure restoration technique. First, according to the traffic direction, optical ring networks are divided into unidirectional optical ring networks in which traffic is transmitted only in one direction and bi-directional optical ring networks in which traffic is transmitted in two opposite directions. In addition, according to the failure restoration technique, networks are divided into path-switched optical ring networks and line-switched optical ring networks.

An example of conventional WDM optical transmission networks with a self-healing function and using two strands of optical fiber, include a unidirectional optical ring network is a two-fiber WDM Unidirectional Path Switched Ring (UPSR), and an example of a bi-directional optical ring network is a two-fiber WDM Bi-directional Line Switched Ring (BLSR).

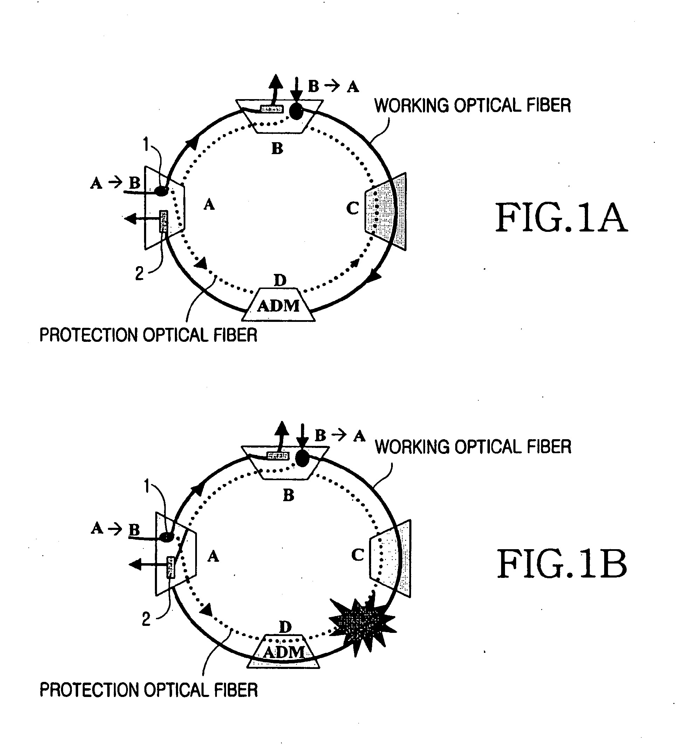

Figs. 1a and 1b show schematic configurations of a two-fiber WDM UPSR. In particular, Fig. 1a shows a normal state, while Fig. 1b shows an abnormal state.

As shown in Figs. 1a and 1b, the WDM UPSR is designed so that one of its two strands of optical fiber is allocated as a working fiber, while the other is allocated as a protection fiber. In a transmitting section, the same optical signals are split by a splitter 1, and then transmitted to the working fiber and the protection fiber: In a receiving section, optical signals are selected and received through an optical switch 2. In a normal state operation, optical signals are received through the working fiber (Fig. 1a), but when a failure occurs, the optical switch of the receiving section is switched, and then optical signals are received through a protection fiber (Fig. 1b). Such WDM UPSR has a relatively simple construction and can be used without changing initial allocated paths even in a failure state.

However, in such WDM UPSR, the working fiber has to share the same nodes as the protection fiber. Moreover, the nodes of the protection fiber are used only in an abnormal state (i.e., not used in a normal state), which increases the cost for the nodes

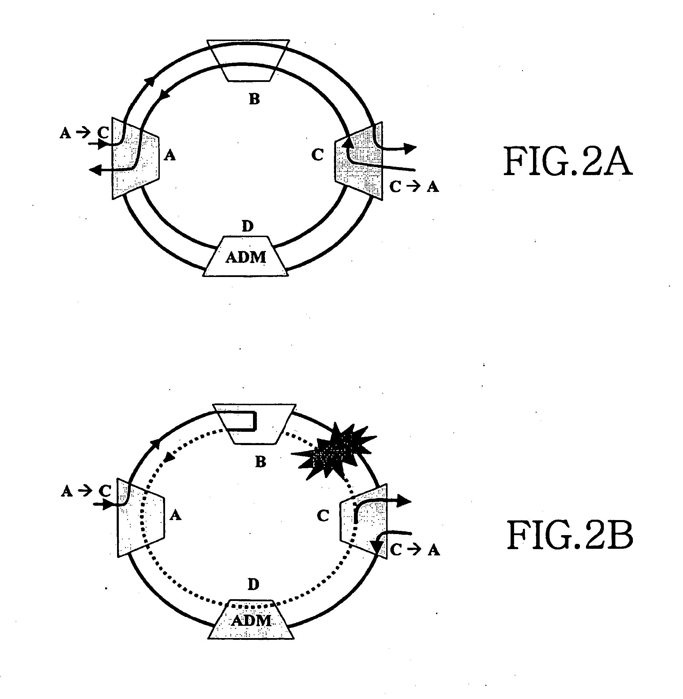

Figs. 2a and 2b show schematic configurations of a two-fiber WDM BLSR. In particular, Fig. 2a shows a normal state, while Fig. 2b shows an abnormal state.

As shown in Figs. 2a and 2b, the WDM BLSR is designed so that in a Dense Wavelength Division Multiplexing (DWDM), a single optical fiber is allocated as neither a working fiber nor a protection fiber. In contrast, one half of the total wavelengths propagated in the single optical fiber are allocated as working wavelengths assigned to data having a higher quality of service, and the other half is allocated as protection wavelengths assigned to data having a lower quality of service. In a failure state, only wavelengths allocated as working wavelengths are used to restore the network, but wavelengths allocated as protection wavelengths are not used. Since the WDM BLSR allows all the nodes shared with two strands of optical fiber to be available in a normal state, the node availability is high

However, in such WDM BLSR systems, optical signals that cannot travel to a target destination, due to a broken path when a failure takes place, are turned back toward the target destination (i.e., in the direction opposite to the original traveling direction). To maintain optical signal quality during a failure, the number of paths for optical wavelengths allocated in a normal state may be increased.

It should also be appreciated that a WDM UPSR or WDM BLSR requires at least two strands of optical fiber. When N number of channels pass through the optical fiber in the normal state, the number of channels applied to an amplifier of each node in the abnormal state fall to a range from 0 (zero) to N. Therefore, according to the input power of the amplifier, the controlling region becomes broad.

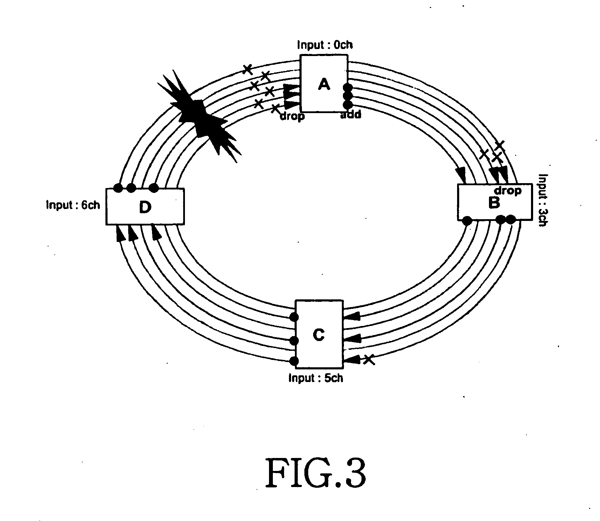

Fig. 3 shows how a plurality of channels are input into each node when a failure takes place in a WDM UPSR with six channels. In this example, the WDM UPSR includes of four nodes. When communication is carried out with six channels between the four nodes, an amplifier associated with each node in a normal state is supplied with a constant power for the six channels. However, when a failure of the optical fiber takes place, no channel is input into the nodes nearest to the failure position. Therefore, channels between 0 and 6 are input into each node, which requires that each amplifier must be able to cope with various input powers.

Accordingly, there is a need in the art for improved bi-directional wavelength division multiplexing self-healing optical networks.

EP 1 221 779 relates to a bi-directional wavelength division multiplexing add/drop multiplexer of a bi-directional WDM optical transmission system. The system includes two transceivers which include, amongst others, a multiplexer for multiplexing optical signals of transmission nodes and an optical circulator for setting an optical signal path so as to provide optical transmission signals outputted from the multiplexer to an optical fiber. Each of the transceivers further include reception nodes for receiving optical signals received through the optical fiber. Further, a WDM-ADM (add/drop multiplexer) is described, which includes optical circulators for switching optical signal paths of the respective input nodes to associated output nodes. For example, a left transceiver outputs odd-number optical signals, which are applied to a first optical circulator of the WDM-ADM through a first optical fiber. Similarly, the even-numbered optical signals output from a right transceiver are applied to the second optical circulator of the WDM-ADM through a second optical fiber. The optical signals output from the left transceiver are provided to a first node of a first inter-leaver through the first optical circulator, while the optical signals output from the right transceiver are provided to the second node of the first inter-leaver through the second optical circulator. The first inter-leaver interleaves the optical signals with odd- and even-numbered wavelengths, and provides the inter-leaved optical signal to the ADM.

It is the object of the present invention to provide a bi-directional wavelength division multiplexing self-healing optical network capable of reducing expenses necessary to construct nodes as well as increasing availability of an optical fiber, by constructing a bi-directional self-healing optical network with one strand of optical fiber.

This object is solved by the subject matters of the independent claims. Preferred embodiments are defined in the dependent claims.

An aspect of the present invention is to provide a bi-directional wavelength division multiplexing self-healing optical network capable of reducing a controlling region according to input power of an optical amplifier of each node by decreasing a difference in the number of channels inputted into the optical amplifier.

One embodiment of the present invention is directed to a bi-directional wavelength division multiplexing self-healing optical network, in which a plurality of nodes are connected with each other through an optical fiber. Each of the nodes includes a transmitting section for outputting a plurality of channels of different wavelengths and for transmitting the same transmission data on a plurality of pairs of channels. Each pair of channels includes an odd-numbered channel for one channel and an even-numbered channel for the other channel. The network also includes a wavelength switching bi-directional add/drop multiplexing section including first to fourth inter-leavers. Each of the inter-leavers is provided with first to third terminals that allow for transmitting optical signals in both directions. Each of the inter-leavers have the second and third terminals connected with each other by means of one strand of optical fiber, causing the odd-numbered channels and the even-numbered channels, which the plurality of pairs of channels carrying the same transmission data are comprised of, to be forwarded in a direction opposite to each other, causing both the odd-numbered channels and the even-numbered channels forwarded in opposite directions to be forwarded in the same direction through the first terminal, and inter-leavering the odd numbered channels and the even-numbered channels forwarded in the same direction. The network also including an add/drop multiplexing unit for demultiplexing the channels in order to drop at least one, which is to be received, of the optical signals inter-leavered with the odd- and even-numbered channels by the second inter-leaver, and for multiplexing at least one, which is to be transmitted, of the optical signals inter-leavered with the odd- and even-numbered channels by the second inter-leaver; a switching section for sensing whether or not at least one optical signal to be received from a plurality of odd- and even-numbered channel pairs which have been demultiplexed and dropped exists and for switching such an optical signal to at least one failure-free channel, and a receiving section for receiving at least one optical signal from the switched channel.

The above features and advantages of the present invention will be more apparent from the following detailed description taken in conjunction with the accompanying drawings, in which:
Figs. 1a and 1b show schematic configurations of a two-fiber WDM UPSR;
Figs. 2a and 2b show schematic configurations of a two-fiber WDM BLSR;
Fig. 3 shows how a plurality of channels are input into each node when a failure takes place in a WDM UPSR with six channels;
Fig. 4 shows a configuration of one of a plurality of nodes applied to a bi-directional wavelength division multiplexing self-healing optical network according to one embodiment of the present invention;
Fig. 5 shows the operation of one of a plurality of inter-leavers that are applied in accordance with aspects of the present invention;
Fig. 6 shows a configuration of a bi-directional wavelength division multiplexing self-healing optical network in a normal state, which is implemented with four nodes using the configuration of the node shown in Fig. 4;
Fig. 7 shows a configuration of a bi-directional wavelength division multiplexing self-healing optical network in a failure state, which is implemented with four nodes using the configuration of the node shown in Fig. 4; and
Fig. 8 shows how a plurality of channels are input into each node when a failure takes place in a bi-directional wavelength division multiplexing self-healing optical network in accordance with aspects of the present invention, in which communication is carried out with eight channels between four nodes.

Hereinafter, a preferred embodiment of the present invention will be described in detail with reference to the accompanying drawings. For the purposes of clarity and simplicity, a detailed description of known functions and configurations incorporated herein will be omitted as it may obscure the subject matter of the present invention.

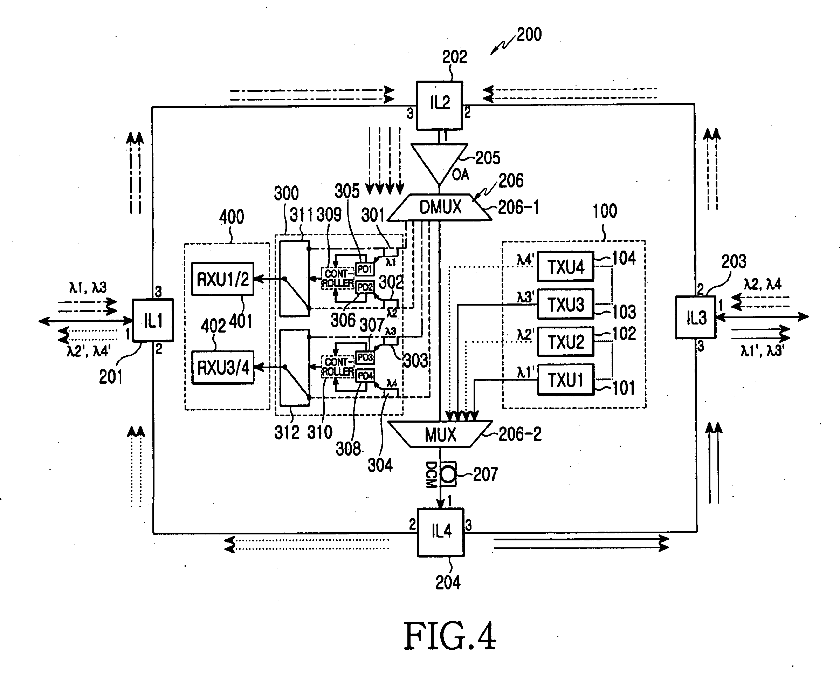

Fig. 4 shows a configuration of any one of a plurality of nodes applied to a bi-directional wavelength division multiplexing self-healing optical network according to one embodiment of the present invention. Each of the nodes includes a transmitting section 100 for modulating the same transmission data onto a plurality of pair of odd- and even-numbered channels and a wavelength switching bi-directional add/drop multiplexing section 200 for causing the odd-numbered channels and the even-numbered channels to travel in a direction opposite to each other, inter-leavering alternately the odd-numbered channels and the even-numbered channels to be combined into a single optical signal, demultiplexing to drop one or more optical signal which is to be received, and multiplexing to add one or more optical signal which is to be transmitted. The node also includes a switching section 300 for sensing whether or not at least one receivable signal exists and for then converting a forwarding direction of the sensed receivable signal into another failure-free direction and a receiving section 400 for receiving a switched receivable signal. In the present embodiment, description will be made regarding construction for receiving two channels of λ2 and M, but it will be apparent that it is possible to expand the construction for receiving N number of channels. Further, a bi-directional add/drop multiplexing unit is disclosed in detail in Korean Patent Application No. 2002-0027146, entitled "wavelength switching bi-directional add/drop multiplexing unit" and filed on May 16, 2002. For this reason, the bi-directional add/drop multiplexing unit will not be described in detail below.

The transmitting section 100 includes a plurality of optical transmitters 101 to 104 that output different channels of different wavelengths λ1, λ2, λ3 and λ4. Of the channels, adjacent pairs of odd and even channels, for example λ1 and λ2, carry the same data.

The wavelength switching bi-directional add/drop multiplexing section 200 includes a bi-directional add/drop multiplexing unit 206 including four inter-leavers 201 to 204, an optical amplifier 205, a demultiplexer 206-1 and a multiplexer 206-2, and a dispersion-compensating module 207.

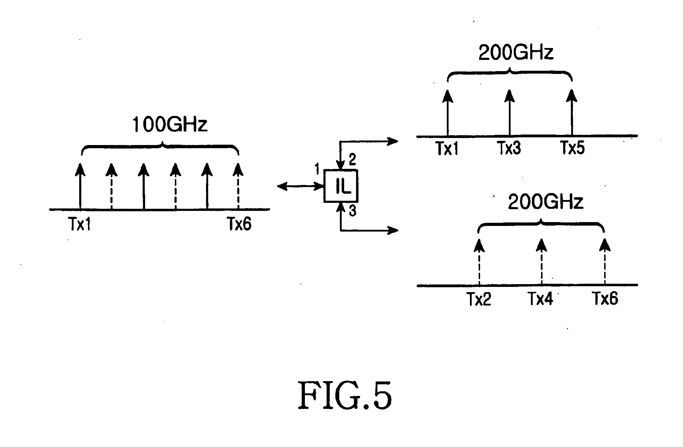

Referring to Fig. 5, wavelength division multiplexed optical signals are input into a number 1 terminal of the inter leavers 201 to 204, even-numbered channels are outputted to a number 2 terminal, while odd-numbered channels are outputted to a number 3 terminal. It is noted that both even-numbered channels input into the number 2 terminal and odd-numbered channels input into the number 3 terminal are output to the number 1 terminal.

The optical amplifier 205 amplifies and outputs input optical signals. The optical amplifier 205 may make use of a unidirectional optical amplifier, such as an Er-doped optical amplifier, a Pr-doped optical amplifier, a semiconductor laser amplifier and so forth.

The bi-directional add/drop multiplexing unit 206 includes a 1xN demultiplexer 206-1 and an Nx1 multiplexer 206-1. This unit performs a demultiplexing function to drop receivable signals and a multiplexing function to add transmittable signals.

The dispersion-compensating module 207 compensates for chromatic dispersion generated from an optical fiber through which optical signals are transmitted during a high-speed transmission. Examples of a dispersion-compensating module are a chromatic dispersion-compensating fiber or a fiber grating.

The switching section 300 includes four 10/90 couplers 301 to 304, four photodiodes 305 to 308, two controllers 309 and 310, and two 1x2 optical switches 311 and 312.

The 10/90 couplers 301 to 304 branch off receivable optical signals to check whether receivable optical signals exist.

The photodiodes 305 to 308 sense intensities of the branched optical signals and then transmit the sensed results.

The controllers 309 and 310 check whether optical signals exist according to light intensities sensed from the photodiodes to control the optical switches.

The 1x2 optical switches 311 and 312 carry out the switching of failure channels into failure-free channels by means of the controllers 309 and 310.

The receiving section 400 includes two optical receivers 401 and 402, and receives the switched failure-free channels or optical signals.

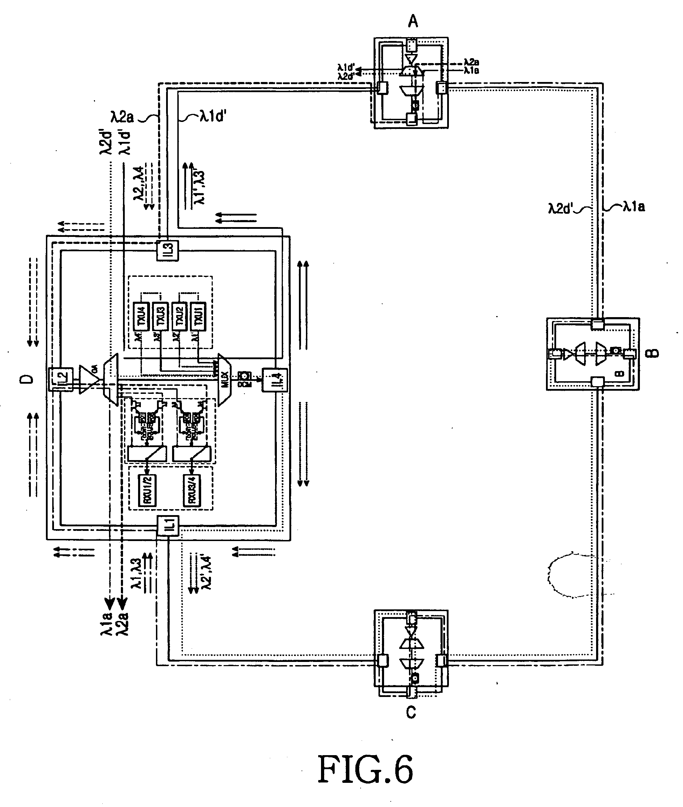

Fig. 6 shows a configuration of a bi-directional wavelength division multiplexing self-healing optical network in a normal state, which is implemented with four nodes using the configuration of the node shown in Fig. 4. Here, all four nodes have the same configuration and only one of the nodes (i.e., node D) is shown for the sake of convenience.

Fig. 6 depicts communication between nodes A and D. In node A, identical data are modulated onto each of the channels λ1, λ2, λ3 and λ4. The λ1 and λ3 channels are transmitted in the clockwise direction, while the λ2 and λ4 channels are transmitted in the counterclockwise direction. In node D, at least one appropriate channel is selected from among the transmitted channels. In node D, identical data is carried on each of the channels λ1', λ2', λ3' and λ4'. The λ1' and λ3' channels are transmitted in the clockwise direction, while the λ2' and λ4' channels are transmitted in the counterclockwise direction. In node A, at least one appropriate channel is selected from among the transmitted channels.

Referring now to Figs. 4 and 6, the operation of node D will be described. Identical data is carried on the λ1' channel of a TXU1 and a first transmitter 101, on the λ2' channel of a TXU2 and a second transmitter 102, on the λ3' channel of a TXU3 and a third transmitter 103, and on the λ4' channel of a TXU4 and a fourth transmitter 104. Of the carried channels, an odd-numbered channels, the λ1' and λ3' channels are transmitted in the clockwise direction, while even-numbered channels, the λ2' and λ4' channels are transmitted in the counterclockwise direction. The λ1 and λ3 channels input from the A node are input through an IL1, a first inter-leaver 201, into an IL2, a second inter-leaver 202, while the λ2 and λ4 channels are input through an IL3, a third inter-leaver 203, into the IL2. In the IL2, the optical signals, which are input into each of the number 2 and 3 terminals in a direction opposite to each other, are subjected to inter-leavering - performing allocation in a manner to alternate the odd-numbered channels and the even-numbered channels with each other and to make the interval between adjacent channels narrow - to be combined into a single optical signal, which then are output to number 1 terminal. The combined single optical signal is amplified by the optical amplifier 205, and separated into discrete wavelengths by the demultiplexer 206-1 of the bi-directional add/drop multiplexing unit 206. Optical signals, i.e., the λ1, λ2, λ3 and λ4 channels, which are to be transmitted at a target node are dropped. The dropped individual optical signals are branched off at the 10/90 couplers 301 to 304. Intensities of optical signals branched by the photodiodes 305 to 308 are sensed. The controllers 309 and 310 check whether optical signals exist according to the intensity of optical signals and then to cause the optical switches 311 and 312 to switch them into failure-free channels. In a normal state, the λ2 and λ4 channels, which are input along the closest path, are input into the RXU1 401 and the RXU2 402. The other unreceived signals, i.e., the λ1 and λ3 channels and the newly added λ1', λ2', λ3' and λ4' channels, are multiplexed again by the multiplexer 206-2 of the bi-directional add/drop multiplexing unit 206. The multiplexed optical signals, which generate a chromatic dispersion during a high-speed transmission, are compensated by the dispersion compensating module 207, and are input into the number 1 terminal of the IL4, the fourth inter-leaver 204. As a result, odd-numbered channels are output to the number 3 terminal or the right-hand path of the IL4 and then input into the IL3, the third inter-leaver 203. The even-numbered channels are output to the number 2 terminal or the left-hand path of the IL4 and then input into the IL1, the first inter-leaver 201. Either the odd-numbered channels input into IL1 or the even-numbered channels input into IL3 are directed to a target node. For instance, the λ1' and λ3' channels may be received at the node A along the closest path.

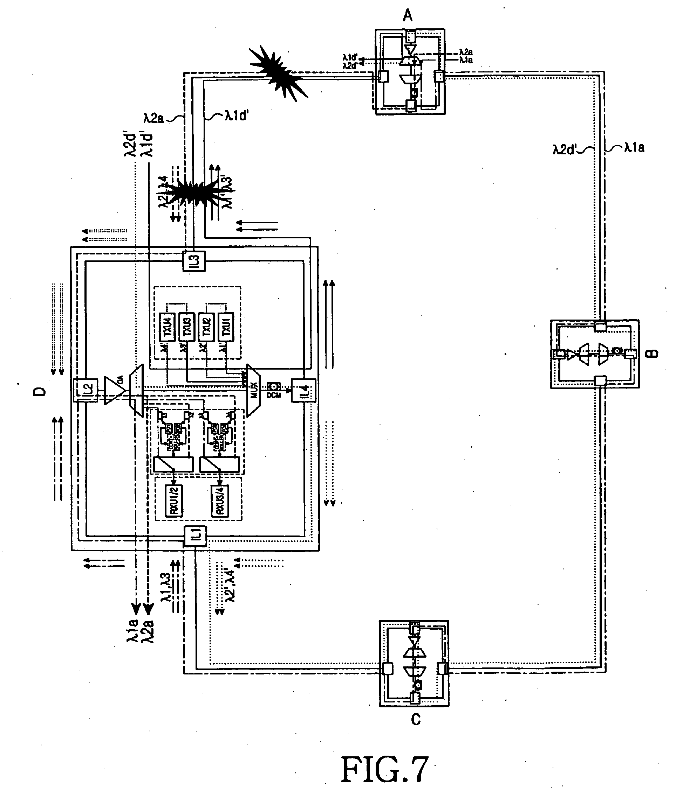

Fig. 7 shows a configuration of a bi-directional wavelength division multiplexing self-healing optical network in a failure state. This example network is implemented with four nodes using the configuration of the node shown in Fig. 4. In particular, Fig. 7 shows a configuration in which optical fiber switching is generated between nodes A and D.

Optical fiber switching generated between nodes A and D makes it impossible to transmit optical signals either from node A to node D in the counterclockwise direction or from node D to node A in the clockwise direction. Therefore, the λ1 and λ3 channels traveling in the clockwise direction in node A are transmitted to node D, while the λ2' and λ4' channels traveling in the counterclockwise direction in node D are transmitted to node A.

Referring now to Figs. 4 and 7, the operation of node D will be described in regard to the above-mentioned normal state operation.

The receiving section 100 performs the same operation in an abnormal state as that in the normal state. In this regard, identical data is carried on each of the λ1' channel of the TXU1 101, the λ2' channel of the TXU2 102, the λ3' channel of the TXU3 103, and the λ4' channel of the TXU4 104. Of the channels, odd-numbered channels, the λ1' and λ3' channels, are transmitted in the counterclockwise direction, while even-numbered channels, the λ2' and λ4' channels, are transmitted in the clockwise direction. However, the even-numbered channels, including the λ2 and λ4 channels make it impossible to be input from node A to node D. The odd-numbered channels, including the λ1' and λ3' channels, which are added in node D, make it impossible to forward through the IL4 204 and the IL3 203 toward the node A. Therefore, the odd-numbered channels, including the λ1' and λ3' channels, are reflected and fed back through the IL3 203 and the IL2 202. However, because the counterclockwise path from the number 2 terminal of the IL3 203 to the number 2 terminal of the IL2 202 is one over which the even-numbered channels are transmitted, each of the odd-numbered channels, including the λ1' and λ3' channels, which are reflected and fed back due to the optical fiber failure or switching, is constrained by the second and third inter-leavers 202 and 203 to the level of 20 dB or more. Thus, since the reflected λ1' and λ3' channels have a difference of 40 dB or more in comparison with λ1 and λ3 channels, which are input from node A to node D after reflection of a maximum of 4 % (14 dB), the reflected λ1' and λ3' channels do not act as noise. The λ1 and λ3 channels input from the node A allow their attenuated components to be amplified by the optical amplifier 205 and the first and second inter-leavers 201 and 202. The amplified λ1 and λ3 channels are separated into discrete wavelengths by the demultiplexer 206-1 of the bi-directional add/drop multiplexing unit 206, but optical signals, such as channels λ1 and λ3, which are to be transmitted at the corresponding node, are dropped. Each dropped optical signals is branched off through the 10/90 couplers 301 to 304. The photodiodes 305 to 308 sense the intensities of the branched optical signals and then transmit the sensed results to the controllers 309 and 310. Without the λ2 and λ4 channels or other optical signals, the controllers 309 and 310 cause the optical switches 311 and 312 to be switched to the failure-free λ1 and λ3 channels. Owing to the switching operation of the 1x2 optical switches 309 and 310, the λ1 and λ3 channels are input into an RXU1/2, a first receiver 401, an RXU3/4, and a second receiver 402. Newly added optical signals, i.e., the λ1', λ2', λ3' and λ4' channels, are multiplexed by the multiplexer 206-2 of the bi-directional add/drop multiplexing unit 206. The multiplexed optical signals, which generate a chromatic dispersion during high-speed transmission, are compensated by the dispersion compensating module 207, and then input into the number 1 terminal of the IL4 204. The odd-number channels are output to the number 3 terminal or the right-hand path of the IL4 and then input into the IL3 203. Even-numbered channels are output to the number 2 terminal or the left-hand path of the IL4 and then input into the IL1 201. Either the odd-numbered channels input into IL3 or the even-numbered channels input into IL1 are directed to their target node. For instance, the λ2' and λ4' channels, passing through nodes C and B without optical fiber switching may be received at node A.

The above-mentioned configuration enables the optical signals for transmission to be effectively transmitted through a single optical fiber without changing the optical fiber even during optical fiber switching.

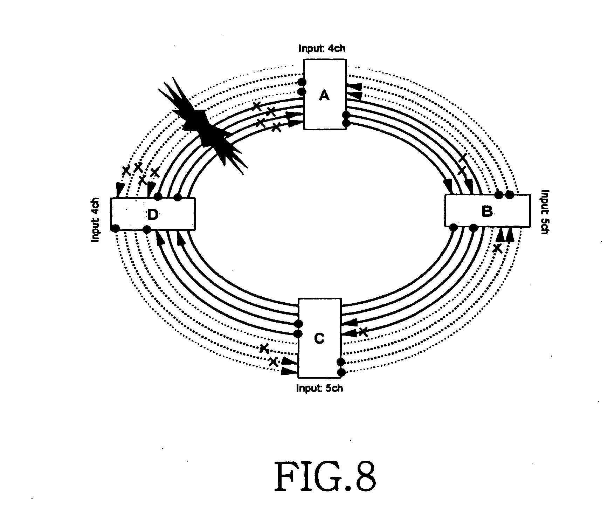

Fig. 8 is a diagram representing what when a failure takes place in a bi-directional wavelength division multiplexing self-healing optical network according to aspects of the present invention. In Fig. 8, communication is carried out with eight channels between four nodes. Dots and solid lines represent channels forwarding in a direction opposite to each other. A symbol X represents a channel that is not input into a target node. A symbol **•** (a large dot) represents a channel that is passing through a certain node. Finally, a symbol ► (an arrow) represents a dropped channel.

In a normal state, an optical amplifier in each node is supplied with a uniform channel power with respect to all eight channels. However, when a certain optical fiber encounters a switching or a failure, four channels, half of the total existing channels, are input into two nodes A and D adjacent to the switched position, while the other nodes B and C allow for input of four or more channels. Therefore, since the optical amplifier in each node must cope with an input power level ranging from that of four channels to that of five channels, the optical amplifier has only to cope with a variable region (3 dB) belonging to half of the maximal input power, as compared with the conventional self-healing optical network.

While the above-detailed description has been made with reference to preferred embodiments of the present invention, it will be understood by those skilled in the art that various changes in form and details may be made as long as they fall within the scope of the invention. Therefore, the invention should not be limited to the preferred embodiment thereof, but be defined by the appended claims as well as by the equivalent to the claims.

As seen from the foregoing description, a bi-directional wavelength division multiplexing self-healing optical network employing one strand of optical fiber according to aspects of the present invention is capable of covering the transmission capacity of the conventional wavelength division multiplexing self-healing optical network employing two stands of optical fiber, because bi-directional optical signals are propagated through the one strand of optical fiber, which makes the optical fiber twice as available as one in the conventional self-healing optical network.

Further, a bi-directional wavelength division multiplexing self-healing optical network according to aspects of the present invention allows bi-directional optical signals to share various optical parts, such as the dispersion compensating module, the optical amplifier and so forth, in each node, so that it has an economical operation over the conventional bi-directional wavelength division multiplexing self-healing optical network.

Also, a bi-directional wavelength division multiplexing self-healing optical network according to aspects of the present invention allows bi-directional wavelengths to be inter-leavered in alternatation between other bi-directional wavelengths propagating in the same direction and then to be transmitted, so that it has good wavelength availability.

Moreover, while the conventional bi-directional wavelength division multiplexing self-healing optical network has an influence on transmission quality when optical signals reflected during optical fiber switching amount to more than 4% of the total optical signals without reflection, a bi-directional wavelength division multiplexing self-healing optical network according to aspects of the present invention has no influence on the transmission quality regardless of the reflected optical signals because reflected optical signals are sufficiently constrained by the inter-leavers.

In addition, when a failure of the optical fiber takes place, nodes adjacent to the optical fiber allow half of the channel power of a normal state to be input, so that a control range, which depends on the input power of the amplifier in each node, can be decreased.

## Claims

1. A node for a bi-directional wavelength division multiplexing self-healing optical ring network, the node (A-D) comprising:
a transmitting section (100) arranged to output a plurality of channels of different wavelengths (λ1'- λ4') and to transmit the same transmission data on a plurality of pairs of channels, each pair of channels including of an odd-numbered channel for one channel and an even-numbered channel for the other channel;
a wavelength switching bi-directional add/drop multiplexing section (200) including a plurality of inter-leavers(201-204), each of the inter-leavers being provided with a plurality of terminals, among which at least a first (1), second (2) and third (3) terminal, which allow for transmitting optical signals in at least two directions or for receiving optical signals from at least two directions, each of the inter-leavers having the second and the third terminal connected respectively with each other by means of one strand of optical fiber, a first inter-leaver of which causing the odd-numbered channels and the even-numbered channels, which the plurality of pairs of channels carrying the same transmission data are comprised of, to be forwarded in a direction opposite to each other, and a second inter-leaver of which causing both the odd-numbered channels and the even-numbered channels received from opposite directions to be forwarded in the same direction through the first terminal, and inter-leavering the odd numbered channels and the even-numbered channels forwarded in the same direction; and including an add/drop multiplexing unit (206) arranged to demultiplex(206-1) the channels in order to drop at least one, which is to be received, of the optical signals inter-leavered with the odd- and even-numbered channels forwarded by the second inter-leaver(202), and to multiplex (206-2) at least one, which is to be transmitted, of the optical signals inter-leavered with the odd- and even-numbered channels by the second inter-leaver;
a switching section (300) arranged to sense whether at least one optical signal for reception from among the plurality of odd- and even-numbered channel pairs which have been demultiplexed and dropped exists, and to switch at least one such sensed optical signal to at least one failure-free channel; and
a receiving section (400) arranged to receive at least one optical signal from the switching section.

2. The node according to claim 1, wherein the plurality of inter-leavers comprise:
a fourth inter-leaver arranged to cause the even-numbered channels among the multiplexed optical signals input from the add/drop multiplexing unit into a first terminal of the fourth inter-leaver to be output to a second terminal of the fourth inter-leaver and for causing the odd-numbered channels to be output to a third terminal of the fourth inter-leaver;
the first inter-leaver arranged to receive the even-numbered channels output to the second terminal of the fourth inter-leaver through a second terminal of the first inter-leaver, to cause the received even-numbered channels to be output through a first terminal of the first inter-leaver to an adjacent target node, and to cause the odd-numbered channels input from the adjacent target node to be outputted to a third terminal of the first inter-leaver;
a third inter-leaver arranged to receive the odd-numbered channels outputted from the third terminal of the fourth inter-leaver through a third terminal of the third inter-leaver, and to cause the received odd-numbered channels to be output through a first terminal of the third inter-leaver to an adjacent target node and to cause the even-numbered channels input from the adjacent target node to be output to a second terminal of the third inter-leaver; and
the second inter-leaver arranged to receive the odd-numbered channels output from the third terminal of the first inter-leaver through a third terminal of the second inter-leaver and the even-numbered channels output from the second terminal of the third inter-leaver through a second terminal of the second inter-leaver, to inter-leaver the received odd-and even-numbered channels according to wavelengths, and to output the inter-leavered odd- and even-numbered channels to a first terminal of the second inter-leaver.

3. The node according to claim 1 or 2, wherein the wavelength switching bi-directional add/drop multiplexing section further comprises;
an amplifier arranged to amplify optical signals inter-leavered by the second inter-leaver and to output the amplified optical signals to the add/drop multiplexing unit; and
a dispersion compensating module arranged to compensate for chromatic dispersion of optical signals multiplexed by the add/drop multiplexing unit and to output the compensated optical signals to the first terminal of the fourth inter-leaver.

4. The node according to one of claims 1 to 3, wherein the odd- and even-numbered channel of each pair are adjacent to each other.

5. The node according to claim 1, wherein the switching section comprises:
a plurality of optical coupler pairs arranged to cause each odd- and even-numbered channel of the pairs of signals which are demultiplexed and dropped to branch off;
a plurality of photodiode pairs arranged to sense intensities of the branched optical signals;
a plurality of optical switches arranged to switch connections of the odd- and even-numbered channel pairs according to whether at least one optical signal to be received exists; and
a plurality of controllers arranged to check whether at least one optical signal to be received exists according to intensities of optical signals sensed by the photodiode pairs and controlling the optical switches.

6. The node according to claim 5, wherein each of the optical switches is a 1x2 optical switch.

7. A bi-directional wavelength division multiplexing self-healing optical network, in which a plurality of nodes are connected with each other through an optical fiber, each of the nodes being arranged according to one of claims 1 to 6.

8. A method of transmitting data in a bi-directional wavelength division multiplexing self-healing optical ring network, in which a plurality of nodes (A-D) are connected with each other through an optical fiber, the method comprising the steps of:
outputting a plurality of channels, from a first node, of different wavelengths (λ1'-λ4') so that the same transmission data is transmitted on a plurality of pairs of channels, each pair of channels including of an odd-numbered channel for one channel and an even-numbered channel for the other channel;
transmitting optical signals, at each node, in two directions so that the odd-numbered channels and the even-numbered channels, which the plurality of pairs of channels carrying the same transmission data are comprised of, are forwarded in a direction opposite to each other, and causing both the odd-numbered channels and the even-numbered channels forwarded in opposite directions to be forwarded, within each node, in the same direction through a first terminal of an inter-leaver of a plurality of inter-leaverscomprised in each node and inter-leavering, at each node, via said inter-leaver, the odd numbered channels and the even-numbered channels forwarded in the same direction through said first terminal;
dropping at least one, which is to be received, of the optical signals inter-leavered with the odd- and even-numbered channels forwarded by said inter-leaver, and multiplexing at least one, which is to be transmitted, of the optical signals inter-leavered with the odd- and even-numbered channels by said inter-leaver;
sensing whether at least one optical signal for reception from among a plurality of odd- and even-numbered channel pairs which have been demultiplexed and dropped exists;
switching at least one such sensed optical signal to at least one failure-free channel; and
receiving at least one optical signal from said switching step.

9. The method according to claim 8, wherein the odd- and even-numbered channel of each pair are adjacent to each other.

## Patentansprüche

1. Knoten für ein bidirektionales, selbstheilendes optisches Ringnetzwerk mit Wellenlängenmultiplexierung (wavelength division multiplexing), wobei der Knoten (A-D) umfasst:
Einen Übertragungsteil (100), der eingerichtet ist, eine Vielzahl von Kanälen mit unterschiedlichen Wellenlängen (A1'- A4') auszugeben und die selben Übertragungsdaten auf einer Vielzahl von Kanalpaaren zu übertragen, wobei jedes Kanalpaar einen Kanal mit ungerader Nummer für einen Kanal und einen Kanal mit gerader Nummer für den anderen Kanal einschließt;
Einen Wellenlängenumschalt-Multiplexierungsteil (200) zum bidirektionalen Hinzufügen/Fallenlassen (wavelength switching bi-directional add/drop multiplexing section), der eine Vielzahl von Interleavern (201-204) einschließt, wobei jeder der Interleaver mit einer Vielzahl von Terminals ausgestattet ist, unter denen es mindestens ein erstes (1), ein zweites (2) und ein drittes (3) Terminal gibt, welche es ermöglichen, optische Signale in mindestens zwei Richtungen zu übertragen oder optische Signale aus mindestens zwei Richtungen zu empfangen, wobei bei jedem der Interleaver das zweite bzw. dritte Terminal durch einen Strang eines optischen Lichtleiters miteinander verbunden sind, wobei ein erster Interleaver verursacht, dass die Kanäle mit ungerader Nummer und die Kanäle mit gerader Nummer, aus welchen die Vielzahl von Kanalpaaren, die die selben Übertragungsdaten befördern, bestehen, in einer Richtung gegensätzlich zueinander weitergeleitet werden, wobei ein zweiter Interleaver verursacht, dass sowohl die Kanäle mit ungerader Nummer als auch die Kanäle mit gerader Nummer, die aus gegensätzlichen Richtungen empfangen werden, in die gleiche Richtung durch den ersten Terminal weitergeleitet werden, und wobei die Kanäle mit ungerader Nummer und die Kanäle mit gerader Nummer, die in die gleiche Richtung weitergeleitet wurden, interleavert (verschachtelt) werden; und der eine Multiplexeinheit (206) zum Hinzufügen/Fallenlassen (add/drop multiplexing unit) einschließt, die eingerichtet ist, die Kanäle zu demultiplexen (206-1), um von den optischen Signalen, die aus den Kanälen mit ungerader und gerader Nummer interleavert wurden und durch den zweiten Interleaver (202) weitergeleitet wurden, mindestens eines, das empfangen werden soll, fallen zu lassen, und die eingerichtet ist, von den optischen Signalen, die aus den Kanälen mit ungerader und gerader Nummer durch den zweiten Interleaver interleavert wurden, mindestens eines, das übertragen werden soll, zu multiplexen (206-2);
Einen Umschaltteil (300), der eingerichtet ist, wahrzunehmen, ob mindestens ein optisches Signal für den Empfang aus der Vielzahl von Kanalpaaren mit ungerader und gerader Nummer, die demultiplext und fallengelassen worden sind, existiert, und der eingerichtet ist, mindestens ein solch wahrgenommenes optisches Signal auf mindestens einen Fehlerfreien Kanal umzulenken; und
Einen Empfangsteil (400), der eingerichtet ist, mindestens ein optisches Signal von dem Umschaltteil zu empfangen.

2. Knoten gemäß Anspruch 1, wobei die Vielzahl von Interleavern umfasst:
Einen vierten Interleaver, der eingerichtet ist, zu verursachen, dass die Kanäle mit gerader Nummer aus den multiplexten optischen Signalen, die von der Multiplexeinheit zum Hinzufügen/Fallenlassen in ein erstes Terminal des vierten Interleavers eingegeben wurden, an ein zweites Terminal des vierten Interleavers ausgegeben werden, und zu verursachen, dass die Kanäle mit ungerader Nummer an ein drittes Terminal des vierten Interleavers ausgegeben werden;
wobei der erste Interleaver eingerichtet ist, um die Kanäle mit gerader Nummer, die an das zweite Terminal des vierten Interleavers ausgegeben wurden, durch ein zweites Terminal des ersten Interleavers zu empfangen, und der eingerichtet ist, zu verursachen, dass die empfangenen Kanäle mit gerader Nummer durch ein erstes Terminal des ersten Interleavers an einen benachbarten Zielknoten ausgegeben werden, und zu verursachen, dass die Kanäle mit ungerader Nummer, die von dem benachbarten Zielknoten eingegeben werden, an ein drittes Terminal des ersten Interleavers ausgegeben werden;
Einen dritten Interleaver, der eingerichtet ist, die Kanäle mit ungerader Nummer, die von dem dritten Terminal des vierten Interleavers ausgegeben wurden, durch ein drittes Terminal des dritten Interleavers zu empfangen, und der eingerichtet ist, zu verursachen, dass die empfangenen Kanäle mit ungerader Nummer durch ein erstes Terminal des dritten Interleavers an einen benachbarten Zielknoten ausgegeben werden, und zu verursachen, dass die Kanäle mit gerader Nummer, die von dem benachbarten Zielknoten eingegeben werden, an ein zweites Terminal des dritten Interleavers ausgegeben werden;
wobei der zweite Interleaver eingerichtet ist, um die Kanäle mit ungerader Nummer, die von dem dritten Terminal des ersten Interleavers ausgegeben wurden, durch ein drittes Terminal des zweiten Interleavers und die Kanäle mit gerader Nummer, die von dem zweiten Terminal des dritten Interleavers ausgegeben wurden, durch ein zweites Terminal des zweiten Interleavers zu empfangen, und der eingerichtet ist, die empfangenen Kanäle mit ungerader und gerader Nummer gemäß Wellenlängen zu interleavern, und die interleaverten Kanäle mit ungerader und gerader Nummer durch ein erstes Terminal des zweiten Interleavers auszugeben.

3. Knoten gemäß Anspruch 1 oder 2, wobei der Wellenlängenumschalt-Multiplexierungsteil (220) zum bidirektionalen Hinzufügen/Fallenlassen des Weiteren umfasst:
Einen Verstärker, der eingerichtet ist, optische Signale, die durch den zweiten Inter-leaver interleavert wurden, zu verstärken, und der eingerichtet ist, die verstärkten optischen Signale an die Multiplexeinheit zum Hinzufügen/Fallenlassen auszugeben; und
Ein Dispersionskompensationsmodul, das eingerichtet ist, eine chromatische Dispersion von optischen Signalen, die von der Multiplexeinheit zum Hinzufügen/Fallenlassen multiplext werden, zu kompensieren, und das eingerichtet ist, um die kompensierten optischen Signale an das erste Terminal des vierten Interleavers auszugeben.

4. Knoten gemäß einem der Ansprüche 1 bis 3, wobei die Kanäle mit ungerader und mit gerader Nummer jedes Paares benachbart zu einander sind.

5. Knoten gemäß Anspruch 1, wobei der Umschaltteil umfasst:
Eine Vielzahl von optischen Kopplerpaaren, die eingerichtet sind, zu verursachen, dass die Kanäle mit ungerader und mit gerader Nummer der Signalpaare, die demultiplext und fallengelassen werden, abgezweigt werden;
Eine Vielzahl von Photodiodenpaaren, die eingerichtet sind, um Intensitäten der abgezweigten optischen Signale wahrzunehmen;
Eine Vielzahl von optischen Umschaltern, die eingerichtet sind, Verbindungen der Kanalpaare mit ungerader und mit gerader Nummer dementsprechend umzuschalten, ob mindestens ein zu empfangendes optisches Signal existiert; und
Eine Vielzahl von Steuerungseinrichtungen, die eingerichtet sind, gemäß der Intensitäten von optischen Signalen, die durch die Photodiodenpaare wahrgenommen wurden, zu überprüfen, ob mindestens ein zu empfangendes optisches Signal existiert, und um die optischen Umschalter zu steuern.

6. Knoten gemäß Anspruch 5, wobei jeder der optischen Umschalter ein optischer 1x2-Umschalter ist.

7. Ein bidirektionales, selbstheilendes optisches Ringnetzwerk mit Wellenlängenmultiplexierung (wavelength division multiplexing), in dem eine Vielzahl von Knoten durch einen optischen Lichtleiter mit einander verbunden sind, und wobei jeder der Knoten gemäß einem der Ansprüche 1 bis 6 eingerichtet ist.

8. Verfahren zum Übertragen von Daten in einem bidirektionalen, selbstheilenden optischen Ringnetzwerk mit Wellenlängenmultiplexierung (wavelength division multiplexing), in dem eine Vielzahl von Knoten (A-D) durch einen optischen Lichtleiter mit einander verbunden sind, und wobei das Verfahren die folgenden Schritte umfasst:
Ausgeben, von einem ersten Knoten, von einer Vielzahl von Kanälen mit unterschiedlichen Wellenlängen (λ1'- A4'), so dass die selben Übertragungsdaten auf einer Vielzahl von Kanalpaaren übertragen werden, wobei jedes Kanalpaar einen Kanal mit ungerader Nummer für einen Kanal und einen Kanal mit gerader Nummer für den anderen Kanal einschließt;
Übertragen, an jedem Knoten, von optischen Signalen in zwei Richtungen, so dass die Kanäle mit ungerader Nummer und die Kanäle mit gerader Nummer, aus welchen die Vielzahl von Kanalpaaren, die die selben Übertragungsdaten befördern, bestehen, in einer Richtung gegensätzlich zueinander weitergeleitet werden, und Verursachen, dass sowohl die Kanäle mit ungerader Nummer als auch die Kanäle mit gerader Nummer, die aus gegensätzlichen Richtungen weitergeleitet werden, innerhalb jeden Knotens, in die gleiche Richtung durch ein erstes Terminal eines Interleavers von einer Vielzahl von Interleavern, die in jedem Knoten enthalten ist, weitergeleitet werden, und Interleavern, bei jedem Knoten, über den Interleaver, der Kanäle mit ungerader Nummer und der Kanäle mit gerader Nummer, die durch das erste Terminal in die gleiche Richtung weitergeleitet wurden;
Fallenlassen, aus den optischen Signalen, die aus den Kanälen mit ungerader und gerader Nummer interleavert wurden und durch den Interleaver weitergeleitet wurden, mindestens eines, das empfangen werden soll, und Multiplexen, aus den optischen Signalen, die aus den Kanälen mit ungerader und gerader Nummer durch den Inter-leaver interleavert wurden, mindestens eines, das übertragen werden soll;
Wahrnehmen, ob mindestens ein optisches Signal für den Empfang aus der Vielzahl von Kanalpaaren mit ungerader und gerader Nummer, die demultiplext und fallengelassen worden sind, existiert;
Umlenken von mindestens einem solch wahrgenommenen optisches Signal auf mindestens einen Fehlerfreien Kanal; und
Empfangen von mindestens einem optischen Signal aus dem Umlenkschritt.

9. Verfahren gemäß Anspruch 8, wobei die Kanäle mit ungerader und mit gerader Nummer jedes Paares benachbart zu einander sind.

## Revendications

1. Noeud pour un réseau en boucle optique à autorétablissement de multiplexage par répartition en longueur d'onde bi-directionnel, le noeud (A-D) comprenant :
une section (100) de transmission agencée pour fournir en sortie une pluralité de canaux de différentes longueurs d'onde (λ1' à λ4') et pour transmettre les mêmes données de transmission sur une pluralité de paires de canaux, chaque paire de canaux comportant un canal à numéro impair pour un canal et un canal à numéro pair pour l'autre canal ;
une section (200) de multiplexage à insertion/extraction bi-directionnelle à commutation de longueur d'onde comportant une pluralité d'entrelaceurs (201 à 204), chacun des entrelaceurs étant doté d'une pluralité de bornes, parmi lesquelles au moins une première (1), une deuxième (2) et une troisième (3) borne, qui permettent une transmission de signaux optiques dans au moins deux directions ou une réception de signaux optiques au moins à partir de deux directions, chacun des entrelaceurs ayant la deuxième et la troisième borne reliées respectivement l'une avec l'autre à l'aide d'un toron de fibre optique, dont un premier entrelaceur amène les canaux à numéro impair et les canaux à numéro pair, dont la pluralité de paires de canaux portant les mêmes données de transmission sont composées, à être transférés dans une direction opposée l'une de l'autre, et dont un deuxième entrelaceur amène les canaux à numéro impair et les canaux à numéro pair reçus à partir des directions opposées à être transférés dans la même direction par l'intermédiaire de la première borne, et un entrelacement des canaux à numéro impair et des canaux à numéro pair transférés dans la même direction ; et comportant un module (206) de multiplexage à insertion/extraction agencé de façon à démultiplexer (206-1) les canaux afin d'en extraire au moins un, qui est à recevoir, parmi les signaux optiques entrelacés avec les canaux à numéro impair et pair transférés par le deuxième entrelaceur (202), et pour multiplexer (206-2) au moins un, qui est à transmettre, parmi les signaux optiques entrelacés avec les canaux à numéro impair et pair par le deuxième entrelaceur ;
une section (300) de commutation agencée pour détecter si au moins un signal optique destiné à une réception à partir de la pluralité de paires de canaux à numéro impair et pair qui ont été démultiplexées et extraites existe on non, et pour commuter au moins un tel signal optique détecté au moins à un canal sans échec ; et
une section (400) de réception agencée pour recevoir au moins un signal optique à partir de la section de commutation.

2. Noeud selon la revendication 1, dans lequel la pluralité d'entrelaceurs comportent :
un quatrième entrelaceur agencé de façon à amener les canaux à numéro pair parmi les signaux optiques multiplexés fournis en entrée à partir du module de multiplexage à insertion/extraction dans une première borne du quatrième entrelaceur à être fournis en sortie à une deuxième borne du quatrième entrelaceur et pour amener les canaux à numéro impair à être fournis en sortie à une troisième borne du quatrième entrelaceur ;
le premier entrelaceur agencé de façon à recevoir les canaux à numéro pair fournis en sortie à la deuxième borne du quatrième entrelaceur par l'intermédiaire d'une deuxième borne du premier entrelaceur, pour amener les canaux à numéro pair reçus à être fournis en sortie par l'intermédiaire d'une première borne du premier entrelaceur à un noeud cible adjacent, et pour amener les canaux à numéro impair fournis en entrée à partir du noeud cible adjacent à être fournis en sortie à une troisième borne du premier entrelaceur ;
un troisième entrelaceur agencé de façon à recevoir les canaux à numéro impair fournis en sortie à partir de la troisième borne du quatrième entrelaceur par l'intermédiaire d'une troisième borne du troisième entrelaceur, et pour amener les canaux à numéro impair reçus à être fournis en sortie par l'intermédiaire d'une première borne du troisième entrelaceur à un noeud cible adjacent et pour amener les canaux à numéro pair fournis en entrée à partir du noeud cible adjacent à être fournis en sortie à une deuxième borne du troisième entrelaceur, et
le deuxième entrelaceur agencé de façon à recevoir les canaux à numéro impair fournis en sortie à partir de la troisième borne du premier entrelaceur par l'intermédiaire d'une troisième borne du deuxième entrelaceur et les canaux à numéro pair fournis en sortie à partir de la deuxième borne du troisième entrelaceur par l'intermédiaire d'une deuxième borne du deuxième entrelaceur, pour entrelacer les canaux à numéro impair et pair reçus selon des longueurs d'onde, et pour fournir en sortie les canaux à numéro impair et pair entrelacés à une première borne du deuxième entrelaceur.

3. Noeud selon la revendication 1 ou 2, dans lequel la section de multiplexage à insertion/extraction bi-directionnelle à commutation de longueur d'onde comporte de plus ;
un amplificateur agencé pour amplifier des signaux optiques entrelacés par le deuxième entrelaceur et pour fournir en sortie les signaux optiques amplifiés au module de multiplexage à insertion/extraction ; et
un module compensateur de dispersion agencé pour compenser la dispersion chromatique de signaux optiques multiplexés par le module de multiplexage à insertion/extraction et pour fournir en sortie les signaux optiques compensés à la première borne du quatrième entrelaceur.

4. Noeud selon l'une des revendications 1 à 3, dans lequel le canal à numéro impair et pair de chaque paire sont adjacents l'un à l'autre.

5. Noeud selon la revendication 1, dans lequel la section de commutation comporte :
une pluralité de paires de coupleurs optiques agencés de façon à amener chaque canal à numéro impair et pair parmi les paires de signaux qui sont démultiplexées et extraites à bifurquer ;
une pluralité de paires de photodiodes agencées de façon à détecter des intensités des signaux optiques bifurqués ;
une pluralité de commutateurs optiques agencés de façon à commuter des connexions des paires de canaux à numéro impair et pair selon le fait qu'au moins un signal optique à recevoir existe ou non ; et
une pluralité de contrôleurs agencés de façon à vérifier si au moins un signal optique à recevoir existe ou non selon des intensités de signaux optiques détectés par les paires de photodiodes et commandant les commutateurs optiques.

6. Noeud selon la revendication 5, dans lequel chacun des commutateurs optiques est un commutateur optique 1x2.

7. Réseau optique à autorétablissement de multiplexage par répartition en longueur d'onde bi-directionnel, dans lequel une pluralité de noeuds sont reliés l'un avec l'autre par l'intermédiaire d'une fibre optique, chacun des noeuds étant agencé selon l'une des revendications 1 à 6.

8. Procédé de transmission de données dans un réseau en boucle optique à autorétablissement de multiplexage par répartition en longueur d'onde bi-directionnel, dans lequel une pluralité de noeuds (A-D) sont reliés l'un avec l'autre par l'intermédiaire d'une fibre optique, le procédé comprenant les étapes :
de fourniture en sortie d'une pluralité de canaux, à partir d'un premier noeud, de différentes longueurs d'onde (λ1' à λ4') de sorte que les mêmes données de transmission soient transmises sur une pluralité de paires de canaux, chaque paire de canaux comportant un canal à numéro impair pour un canal et un canal à numéro pair pour l'autre canal ;
de transmission de signaux optiques, à chaque noeud, dans deux directions de sorte que les canaux à numéro impair et les canaux à numéro pair, dont la pluralité de paires de canaux portant les mêmes données de transmission sont composés, soient transférés dans une direction opposée l'une à l'autre, et de conduite des canaux à numéro impair et des canaux à numéro pair transférés dans des directions opposées à être transférés, à l'intérieur de chaque noeud, dans la même direction par l'intermédiaire d'une première borne d'un entrelaceur d'une pluralité d'entrelaceurs inclus dans chaque noeud et d'entrelacement, à chaque noeud, par l'intermédiaire dudit entrelaceur, des canaux à numéro impair et des canaux à numéro pair transférés dans la même direction par l'intermédiaire de ladite première borne ;
d'extraction d'au moins un signal, qui est à recevoir, parmi les signaux optiques entrelacés avec les canaux à numéro impair et pair transférés par ledit entrelaceur, et de multiplexage d'au moins un signal, qui est à transmettre, parmi les signaux optiques entrelacés avec les canaux à numéro impair et pair par ledit entrelaceur,
de détection si au moins un signal optique destiné à une réception à partir d'une pluralité de paires de canaux à numéro impair et pair qui ont été démultiplexées et extraites existe ou non ;
de commutation d'au moins un tel signal optique détecté au moins à un canal sans échec ; et
de réception d'au moins un signal optique à partir de ladite étape de commutation.

9. Procédé selon la revendication 8, dans lequel les canaux à numéro impair et pair de chaque paire sont adjacents l'un à l'autre.
